# DEMANDE DE BREVET EUROPEEN

(11) **EP 3 943 864 A1**
(43) Date de publication de la demande: **26.01.2022**
(21) Numéro de dépôt: 21186234.7
(22) Date de dépôt: 16.07.2021
(51) Int. Cl.: F28D 20/02, F03G 6/00, F03G 7/00, F28D 20/00

(54) **PROCÉDÉ ET SYSTÈME POUR LE STOCKAGE THERMOMÉCANIQUE D'ÉNERGIE**

(30) Priorité: 17.07.2020 FR 2007511
(71) Demandeur: Gilliard, Pierre, 5100 Namur (BE)
(72) Inventeur: Gilliard, Pierre, 5100 Namur (BE)

(57) **Abrégé**

Procédé pour le stockage thermomécanique d'énergie thermique selon lequel, dans une étape de stockage,
• de l'énergie thermique est introduite via des moyens d'entrée d'énergie thermique dans un réservoir thermique comprenant au moins une unité de stockage, ladite unité comprenant un matériau de stockage capable de subir une transition de phase d'une phase d'énergie interne inférieure vers une phase d'énergie interne supérieure,
• une partie substantielle du matériau de stockage est transformée en sa phase d'énergie interne supérieure par absorption de l'énergie thermique introduite dans le réservoir, et selon lequel, dans une étape de restitution,
• de l'énergie thermique est transférée de la au moins une unité de stockage à un fluide de travail,
• une quantité du fluide de travail, au moins en partie sous forme gazeuse, est mise en contact avec un convertisseur d'énergie thermique en énergie mécanique,
• de l'énergie mécanique est produite par le convertisseur, par expansion volumétrique du dit fluide de travail,
• l'énergie mécanique est transférée à des moyens de sortie d'énergie mécanique en vue de son utilisation.

## Description

L'invention concerne un procédé pour le stockage thermomécanique d'énergie thermique, en particulier d'énergie résiduaire provenant de processus industriels ou d'énergie provenant de champs solaires. Elle concerne aussi un système pour la mise en œuvre du procédé.

Dans le contexte du développement durable, les difficultés posées par le stockage de l'énergie prennent une place importante. La production d'énergies renouvelables par exemple d'origine solaire ou éolienne est par nature intermittente et ne peut prendre tout son essor sans solution pour le stockage de ces énergies entre le moment de leur production et le moment de leur consommation. Lorsque ces énergies renouvelables sont sous forme électrique l'utilisation de batteries est coûteuse et pose le problème de leur recyclage, rendu plus aigu par leur durée de vie limitée. De plus, leur construction elle-même utilise des minerais dont l'extraction génère encore de nos jours une pollution importante. Dans le cas particulier des utilisations domestiques de l'énergie, de nombreux foyers se sont équipés de panneaux pour capter l'énergie solaire, sous forme thermique ou électrique. Lors de journées fortement ensoleillées un surplus d'énergie est produit. Lorsque l'énergie est sous forme électrique les surplus sont habituellement injectés dans le réseau électrique mais le coût de cette solution pour les sociétés de distribution ne peut être ignoré, est répercuté sur tous les utilisateurs et ce d'autant plus que le nombre de foyers équipés de systèmes de captage d'énergie solaire augmente fortement et est encouragé au niveau environnemental.

Il existe donc un besoin pour des systèmes de stockage d'énergie simples, durables au point de vue environnemental et possédant une bonne efficacité.

Dans US2016/0032783, est décrit un système de stockage et de récupération d'énergie selon lequel, dans la phase de stockage, un fluide est extrait sous forme vapeur d'un premier récipient, est ensuite comprimé, refroidi par passage dans un régénérateur et finalement condensé dans un second récipient dont la pression et la température augmentent durant le stockage. Lors de la phase de récupération, le fluide du second récipient est vaporisé à son tour, réchauffé en repassant dans le régénérateur et finalement détendu, l'énergie de la détente étant utilisée. Dans ce procédé connu, les moyens de compression et de détente doivent fonctionner à des pressions fortement variables selon le degré de charge du dispositif. Comme l'énergie est principalement stockée sous forme de liquide comprimé, des pressions élevées sont nécessaires pour obtenir une densité d'énergie satisfaisante. Des températures élevées sont également nécessaires, typiquement de plusieurs centaines de degrés Celsius, ce qui pose des difficultés d'isolation thermique et augmente fortement le coût du procédé.

Dans EP 2673586 est décrit un dispositif d'absorption d'énergie thermique comprenant une pluralité de cellules contenant un matériau à changement de phase. Les dimensions des différentes cellules ont une distribution permettant au dispositif de réagir aussi bien aux transitoires rapides qu'au transitoires lents.

Sur le site internet de PCMPRODUCTS sont décrites diverses familles de matériaux à changement de phase.

US4192144 décrit un échangeur de chaleur à contact direct qui utilise un changement de phase liquide -vapeur d'un fluide travail au sein de l'échangeur, ainsi qu'un système de production d'énergie incorporant cet échangeur. Des variantes de l'échangeur utilisent des matériaux à changement de phase.

WO 2014/183892 décrit un accumulateur d'énergie thermique comprenant un matériau de stockage à changement de phase qui est intégré dans le circuit d'un fluide de travail, de telle manière que la condensation et l'évaporation du fluide de travail puissent se produire au contact du matériau à changement de phase. Le fluide de travail peut être utilisé dans un cycle de Rankine organique.

WO79/01004 décrit un système de conversion d'énergie solaire en énergie électrique dans lequel le fluide de travail, alimentant un cycle de Rankine, circule dans un échangeur couplé thermiquement à une composition de sels fusibles agissant comme réservoir d'énergie thermique.

US2011/0083436 A1 décrit un système et procédé pour le stockage d'énergie thermique et son transfert à une unité de conversion en énergie mécanique. Ils comprennent l'utilisation de deux matériaux à changement de phase, le premier de type solide liquide pour le stockage proprement dit et le deuxième, de type liquide vapeur pour le transfert à l'unité de conversion qui peut comprendre un cycle de Stirling.

WO2018/170533 décrit également un système de stockage et de récupération d'énergie thermique mais celle-ci est d'abord produite par dissipation d'énergie électrique. Les étapes de production, stockage dans un matériau à changement de phase et récupération de l'énergie thermique sont organisées en couches superposées. L'invention vise à fournir un procédé pour le stockage thermomécanique d'énergie qui soit simple, économique et peu polluant, tant à sa production qu'à son utilisation. Elle vise en particulier à fournir de tels procédés ayant un rendement thermodynamique global amélioré.

En conséquence, l'invention concerne un procédé pour le stockage thermomécanique d'énergie thermique selon lequel, dans une étape de stockage,
- de l'énergie thermique est introduite via des moyens d'entrée d'énergie thermique dans un réservoir thermique comprenant au moins une unité de stockage, ladite unité comprenant un matériau de stockage capable de subir une transition de phase d'une phase d'énergie interne inférieure vers une phase d'énergie interne supérieure,
- une partie substantielle du matériau de stockage est transformée en sa phase d'énergie interne supérieure par absorption de l'énergie thermique introduite dans le réservoir,
   et selon lequel, dans une étape de restitution,
- de l'énergie thermique est transférée de la au moins une unité de stockage à un fluide de travail, le fluide de travail étant en contact avec la dite unité de stockage, une partie substantielle du matériau de stockage contenu dans l'unité de stockage étant de ce fait progressivement transformée en sa phase d'énergie interne inférieure,
- une quantité du fluide de travail, au moins en partie sous forme gazeuse, est mise en contact avec un convertisseur d'énergie thermique en énergie mécanique,
- de l'énergie mécanique est produite par le convertisseur, par expansion volumétrique du dit fluide de travail,
- l'énergie mécanique est transférée à des moyens de sortie d'énergie mécanique en vue de son utilisation.

Selon l'invention, le volume de fluide de travail qui est en contact avec le convertisseur est en communication fluidique avec le volume de fluide de travail qui est en contact avec au moins une unité de stockage, pendant au moins une partie de son expansion volumétrique.

Par stockage thermomécanique il est entendu que le procédé ou le système selon l'invention peut recevoir de l'énergie thermique et restituer de l'énergie à la fois sous forme thermique et mécanique. Dans certains modes d'exécution particuliers il peut aussi recevoir de l'énergie sous forme électrique.

Le procédé selon l'invention comprend au moins une étape de stockage et une étape de restitution. En pratique il en comprend de nombreuses. En fonctionnement, il arrive fréquemment qu'une phase de stockage se produise au moins en partie pendant une phase de restitution, en fonction du rapport entre l'énergie thermique disponible et l'énergie mécanique demandée. Le réservoir thermique est capable de stocker une certaine quantité maximum d'énergie thermique. Lorsque l'entièreté du matériau de stockage contenu dans le réservoir (le cas échéant réparti dans plusieurs unités de stockage) est dans sa phase à énergie interne supérieure, le réservoir est totalement chargé. Une phase de restitution-décharge devra avoir alors lieu afin de décharger au moins partiellement le réservoir avant qu'une nouvelle phase de stockage-charge puisse avoir lieu.

Par réservoir thermique on entend un corps creux isolé thermiquement capable de contenir entre autres au moins une unité de stockage et une quantité suffisante de fluide de travail, permettant leur contact réciproque.

Par unité de stockage on entend un corps solide, d'un seul tenant, comprenant du matériau de stockage, et pouvant être baigné par du fluide de travail sur au moins 50% de sa surface, de manière recommandée 65%, avantageusement 80%, de préférence 90 %. Le cas échéant, l'unité de stockage doit permettre la variation de volume subie par le matériau de stockage lors de son changement de phase.

Tant dans la phase de stockage que la phase de restitution, une partie substantielle du matériau de stockage change de phase. Cela signifie que la quantité de matériau qui change de phase est macroscopique, liée à la quantité d'énergie soit stockée, soit restituée, par conservation de l'énergie. Les quantités microscopiques qui changent de phase du fait de fluctuations thermodynamiques mais n'affectent pas les quantités de substances dans leurs phases respectives ne sont pas considérées.

Dans la suite de cette description, l'expression « matériau de stockage capable de subir une transition de phase d'une phase d'énergie interne inférieure vers une phase d'énergie interne supérieure » sera généralement abréviée en « matériau à changement de phase » ou « MCP ». Des exemples de tels matériaux sont bien connus et amplement décrits dans l'art antérieur. Ils présentent l'avantage de pouvoir stocker une grande quantité d'énergie et de la restituer tout en restant à une température théoriquement constante. En pratique, la température de certains MCP (en particulier les MCP organiques) peut varier légèrement entre le début et la fin de la transition de phase (par exemple entre l'état totalement chargé et l'état totalement déchargé). On recommande d'utiliser des matériaux MCP dont la température varie de moins de 20°C, avantageusement moins de 15°C, préférentiellement moins de 10° entre le début et la fin du changement de phase. Les matériaux pour lesquels cette différence de température est inférieure à 5°C sont particulièrement préférés. De nombreux types de matériaux à changement de phase peuvent être utilisés dans l'invention. Ils peuvent être de type organique (tels que par exemple le polyéthylène, les paraffines, les acides gras, les polyols tels que le pentaerythritol) ou inorganiques (p.ex. hydrates de sel, mélanges eutectiques de sels).

On recommande d'utiliser des MCP dont la capacité de stockage dépasse 50 MJ/m3, avantageusement 100 MJ/m3, de préférence 200 MJ/m3.

Il est par ailleurs recommandé que le MCP ne présente pas une variation de volume trop importante lors du changement de phase. Cette variation de volume devrait être de préférence inférieure à 100%, avantageusement inférieure à 20%, idéalement inférieure à 10%.

Dans un mode de réalisation de l'invention, la phase d'énergie inférieure du matériau à changement de phase est une phase solide et la phase d'énergie supérieure est une phase liquide ou solide. Dans une variante préférée la phase d'énergie inférieure et la phase d'énergie supérieure sont toutes deux de type solide. De telles transitions de phase sont donc de type « solide-solide »

Il est également avantageux que la température de changement de phase soit comprise entre 100 et 200°C, de préférence entre 110 et 190°C, plus préférentiellement entre 120 et 180°C. C'est en effet dans ces gammes de températures que les énergies thermiques sont le mieux valorisées par l'invention. Dans le cas où la température du MCP ne reste pas rigoureusement constante pendant le changement de phase (ce qui est par exemple le cas des polyéthylènes commerciaux qui ont une distribution de poids moléculaire), cette température est la température du pic DSC (Differential Scanning Calorimetry).

En général, la nature du matériau à changement de phase (MCP) ne permet pas un contact direct entre celui-ci et le fluide de travail. C'est donc une des fonctions de l'unité de stockage de protéger le MCP lorsque c'est nécessaire tout en assurant le meilleur échange thermique possible entre le MCP et le fluide de travail. Il est toutefois recommandé que « la au moins une » unité de stockage (écrite ci dessous « l'unité de stockage ») comprenne, par unité de volume, le plus possible de MCP.

Il est recommandé que l'unité de stockage comprenne au moins 50%, avantageusement 60%, plus avantageusement 70 %, de préférence 80%, plus préférentiellement 90% en volume de matériau à changement de phase.

Dans des modes d'exécution particuliers, l'unité de stockage comprend au moins 95%, avantageusement 96%, plus avantageusement 97 %, de préférence 98%, plus préférentiellement 99% en volume de matériau à changement de phase.

Le MCP se présente communément sous la forme de particules. Par particule on entend une quantité de matériau, d'un seul tenant. Dans le procédé selon l'invention, les particules ont de préférence une forme géométrique et des dimensions favorisant des transferts thermiques rapides. Typiquement la particule a une dimension caractéristique moyenne inférieure à 5mm, avantageusement inférieure à 1mm. Si la particule est de forme approximativement sphérique il s'agit du diamètre de la plus petite sphère pouvant la contenir. Dans le cas de particules fibreuses il s'agit du diamètre du plus petit cylindre pouvant contenir la fibre. Enfin, par exemple dans le cas de particules lamellaires, il s'agit de l'épaisseur de la lamelle, définie de manière semblable.

Le réservoir thermique peut comprendre un nombre très variable d'unités de stockage. Dans une première variante extrême du procédé selon l'invention, dans laquelle le réservoir thermique comprend un très grand nombre d'unités de stockage, l'unité de stockage n'est constituée que d'une seule particule de MCP. Dans ce cas l'unité de stockage comprend avantageusement un volume moyen de MCP (la moyenne étant prise sur la population de particules dans le réservoir) inférieur à lcm3, en général inférieur à 100 mm3, avantageusement inférieur à 10 mm3, de préférence inférieur à 1 mm3.

Dans cette première variante, la particule de MCP est souvent encapsulée. L'encapsulation permet à la particule de maintenir son individualité lors du changement de phase si nécessaire, comme dans le cas fréquent où le changement de phase est de type solide - liquide. Elle protège également le MCP du fluide de travail. Toutefois, dans un mode d'exécution particulier de cette première variante, la particule de MCP n'est pas encapsulée. Dans ce cas l'unité de stockage comprend de préférence 100% de MCP et le fluide de travail est en contact avec le MCP. Ce cas peut par exemple se rencontrer lorsque le MCP subit des transitions de phase de type solide-solide. Dans cette première variante d'exécution, dans laquelle le réservoir thermique comprend un très grand nombre d'unités de stockage, celles-ci peuvent avantageusement être regroupées dans au moins un récipient par exemple ajouré permettant aux unités de stockage de se mouvoir les unes relativement aux autres et permettant au fluide de travail de circuler librement entre les unités de stockage.

Dans une seconde variante du procédé, l'unité de stockage comprend une quantité plus importante de MCP, typiquement une quantité ayant un volume moyen supérieur à lcm3, en général supérieur à 10 cm3, avantageusement supérieur à 100 cm3.

Dans un premier mode d'exécution particulier de cette seconde variante, l'unité de stockage possède une géométrie plus complexe permettant de garder la rapidité des échanges thermiques. Par exemple l'unité de stockage comprend des lamelles de MCP fixées à un support permettant de les maintenir à distance les unes des autres pour la circulation du fluide de travail. S'il n'est pas encapsulé, le matériau MCP peut alors comprendre une charge lui donnant les propriétés mécaniques nécessaires.

Dans un autre mode d'exécution de cette seconde variante, l'unité de stockage comprend un corps creux ayant une forme propice aux échanges thermiques, le corps creux contenant la quantité de MCP désirée. Dans ce mode d'exécution, le MCP ne doit plus être encapsulé, le corps creux pouvant assurer la protection du MCP par rapport au fluide de travail et si nécessaire le maintien de l'individualité des unités de stockage lors des changements de phase. Le corps creux peut avantageusement avoir la forme de minces cylindres, de section circulaire ou avantageusement en rosace, de manière à augmenter la surface de contact entre l'unité de stockage et le fluide de travail, pour une quantité donnée de MCP.

Dans le procédé selon l'invention, une partie substantielle du matériau de stockage est transformée en sa phase d'énergie interne supérieure par absorption de l'énergie thermique introduite dans le réservoir. Tout moyen approprié peut être utilisé pour transférer l'énergie thermique au matériau de stockage. En pratique, on peut par exemple utiliser à cet effet un échangeur thermique connecté aux moyens d'entrée de l'énergie thermique. Dans ce cas il est avantageux qu'il soit au moins en partie baigné dans le fluide de travail, dans lequel l'unité de stockage est elle-même baignée, le fluide de travail assurant alors la connexion thermique entre l'échangeur et l'unité de stockage.

La fonction du fluide de travail est de produire de l'énergie mécanique par expansion volumétrique de sa phase gazeuse. Cette expansion se produit au contact avec un convertisseur d'énergie thermique en énergie mécanique. Le fluide de travail entre en contact avec le convertisseur et son expansion lui transmet de l'énergie. A priori, on peut utiliser dans l'invention tout type de convertisseur d'énergie thermique en énergie mécanique, dans lequel du travail est produit par l'expansion d'un gaz dont la pression est augmentée par apport de chaleur provenant du MCP. L'utilisation de turbines conventionnelles est par exemple possible. Le convertisseur peut être ouvert, disposé dans le réservoir thermique et par exemple comprendre un piston. En général le convertisseur comprend toutefois une enceinte dans laquelle le fluide de travail pénètre. Dans ces cas fréquents, le convertisseur dispose communément de moyens d'entrée du fluide de travail, pouvant être munis d'un système d'obturation destiné à contrôler l'entrée du fluide de travail. Le convertisseur est en général muni de moyens de sortie pour l'extraction du fluide de travail ayant terminé son expansion. Dans ce cas les moyens de sortie sont avantageusement munis d'un système d'obturation pour contrôler le moment de cette extraction, lorsqu'elle n'est pas continue.

L'expansion volumétrique du fluide de travail au contact du convertisseur se produit suite à l'élévation de pression que le fluide de travail subit lorsqu'il reçoit de la chaleur provenant du MCP. Cette chaleur peut provenir en partie de la chaleur sensible du MCP. Toutefois, l'invention utilise la grande quantité d'énergie latente contenue dans les matériaux à changement de phase et une partie substantielle du matériau de stockage contenu dans l'unité de stockage est donc progressivement transformée en sa phase d'énergie interne inférieure, du fait du transfert d'énergie au fluide de travail. Le fluide de travail peut être entièrement sous forme gazeuse. Il peut par exemple être de l'air ou un gaz organique. Toutefois, dans un mode d'exécution préféré de l'invention, le fluide de travail comprend une phase gazeuse et une phase liquide, une partie de la phase liquide étant transformée en phase gazeuse par contact avec l'unité de stockage. L'énergie latente nécessaire à la vaporisation de la partie du fluide de travail concernée est reçue du matériau de stockage lors du contact. Dans ce mode d'exécution une partie au moins du fluide de travail qui est en contact avec au moins une unité de stockage est sous forme liquide. La proportion de la surface de l'unité de stockage en contact avec la phase liquide du fluide de travail vaut avantageusement au moins 10%, de préférence au moins 20% de manière recommandée au moins 30%. Des exemples de fluides de travail pouvant présenter une phase liquide et une phase gazeuse dans l'invention sont par exemple des fluides organiques tels que propane ou butane ou inorganiques. Le choix du fluide de travail est dicté par la température de transition du MCP, et donc de la température à laquelle l'énergie thermique disponible, valorisée par le procédé selon l'invention, peut le chauffer. On recommande d'utiliser des fluides présentant, toutes autres caractéristiques égales, la meilleure conductivité thermique possible. Le fluide de travail est avantageusement de l'eau.

Dans le procédé selon l'invention le fluide de travail est maintenu en contact avec au moins une unité de stockage, un temps suffisant pour qu'une partie substantielle du matériau de stockage qu'elle contient soit transformé en sa phase d'énergie inférieure, cette partie dépendant de la quantité d'énergie mécanique qui est demandée au procédé selon l'invention de restituer.

Le contact est physique au sens matériel, des molécules de fluide étant en contact avec une unité de stockage, mais il est aussi de ce fait thermique, un échange de chaleur de l'unité de stockage vers le fluide de travail étant de ce fait favorisé. Le fluide de travail est considéré dans son ensemble, dans le cas où il est présent sous différentes phases. Afin de favoriser les échanges thermiques lors du contact, il est recommandé que le fluide de travail soit en mouvement relativement à l'unité de stockage. Cet écoulement relatif est de préférence au moins en partie turbulent.

Le volume de fluide de travail qui est en contact avec le convertisseur est en communication fluidique avec le volume de fluide de travail qui est en contact avec au moins une unité de stockage, pendant au moins une partie de son expansion volumétrique.

Par communication fluidique entre les deux volumes de fluide de travail on entend que ces volumes sont connexes et que donc le fluide de travail peut circuler librement entre les dits volumes. Il en résulte un apport supplémentaire d'énergie thermique du MCP au convertisseur par conduction et convection, ce qui augmente le travail fourni par le convertisseur. Il en résulte également la pénétration d'une quantité supplémentaire de fluide de travail dans le convertisseur pendant l'expansion, du fait de la baisse de pression concomitante dans le convertisseur. La partie de l'expansion pendant laquelle la communication fluidique est établie a intérêt à être la plus importante possible et doit être en tout cas suffisante pour que cet effet technique puisse se manifester de manière optimale. L'homme de métier devra la déterminer en fonction des détails techniques mis en œuvre.

Il est en général recommandé, plus précisément, que la communication fluidique soit maintenue pendant une proportion la plus élevée possible du temps pendant lequel le fluide de travail s'expanse, ce qui favorise le transfert thermique, en particulier du fait que la température et la pression du fluide de travail ont tendance à baisser pendant qu'il fournit du travail. En effet, même si dans certains cas la région du fluide de travail qui s'expanse est à une certaine distance d'une unité de stockage, par conductivité thermique et convection, le transfert thermique en est amélioré. Souvent il est recommandé que la communication fluidique soit maintenue avec au moins une unité de stockage pendant au moins 25% du temps pendant lequel le fluide de travail s'expanse et fournit du travail. Il est avantageux que cette proportion atteigne au moins 50%, de préférence 75% plus préférentiellement 80% voire 85%. De manière particulièrement préférée, cette proportion dépasse 90%. Idéalement la connexité est maintenue pendant essentiellement toute l'expansion.

Dans certains modes d'exécution, en particulier ceux dans lesquels le convertisseur comprend des moyens de type piston, il est recommandé que la communication fluidique soit maintenue avec au moins une unité de stockage pendant plus de 0,1 seconde, avantageusement plus de 0,25 seconde, de préférence plus de 0,5 seconde, idéalement plus de 1 seconde. Dans ces modes d'exécution, les mouvements du convertisseur sont donc lents et celui-ci doit être dimensionné en conséquence pour obtenir la puissance désirée.

Grâce à la communication fluidique selon l'invention, la température moyenne (la moyenne étant prise sur le volume connexe), du fluide de travail reste proche de la température de changement de phase du matériau à changement de phase. On recommande que la différence entre ces deux températures, pendant la période de temps durant laquelle la connexité et donc la communication fluidique est établie reste inférieure à 20°C, de préférence inférieure à 15°C, si possible inférieure à 10°C. Dans les modes de réalisation préférés de l'invention il est possible de limiter cette différence à 5°C. Du fait que la connexité est établie pendant au moins une partie de l'expansion du fluide de travail au contact du convertisseur, cette expansion peut en effet se rapprocher d'une expansion isotherme, ce qui augmente le rendement du convertisseur et donc améliore encore le rendement global du procédé.

Dans les variantes de l'invention dans lesquelles le fluide de travail comprend une phase liquide et une phase gazeuse, une partie de la phase liquide étant transformée en phase gazeuse par contact avec l'unité de stockage, le fluide de travail est en équilibre de phase et en contact avec l'au moins une unité de stockage qui reste à sa température de changement de phase. On est en présence de deux équilibres de phases. La communication fluidique selon l'invention permet à la pression dans le volume de phase gazeuse qui s'expanse de moins diminuer, par transfert de fluide de travail supplémentaire, ce fluide supplémentaire étant produit par vaporisation au contact avec au moins une unité de stockage. Cela augmente encore le travail produit par le convertisseur. En pratique, par exemple dans les variantes dans lesquelles le convertisseur comprend une enceinte et des moyens d'entrée du fluide de travail munis d'un système d'obturation, ce dernier reste ouvert pendant au moins une partie de l'expansion du fluide de travail. La combinaison de ces variantes permet de favoriser la pénétration d'un complément de fluide de travail dans le convertisseur pendant l'expansion. A titre d'exemple, des convertisseurs selon ce mode d'exécution peuvent comprendre des moyens de type piston dont la chambre de compression/détente est en communication fluidique avec au moins une unité de stockage pendant la phase de détente.

Lorsque le fluide de travail a terminé son expansion il sort du convertisseur sous forme essentiellement gazeuse, la présence de liquide condensé (brouillard) formé lors de l'expansion étant possible. Ce fluide peut le cas échéant être utilisé tel quel dans certaines applications. Il peut par exemple être introduit dans une machine conventionnelle produisant du travail au départ d'un gaz comprimé. Lorsque le gaz est de la vapeur d'eau, il peut s'agir de tout type de machine à vapeur connue. L'extraction du fluide de travail du convertisseur peut être continue ou discontinue. La première situation (extraction continue) se rencontre lorsque le convertisseur est du type turbine. La seconde situation correspond par exemple aux convertisseurs de type piston. Dans cette seconde situation le convertisseur comprend généralement des moyens de sortie du fluide de travail munis d'obturateurs permettant de réaliser les transferts de fluide de travail de manière appropriée. Le piston est avantageusement associé à des moyens de rappel, par exemple un ressort, qui tend à lui faire reprendre la position de départ, avant l'expansion du fluide de travail. Ces moyens de rappel assistent également l'extraction du fluide expansé.

De manière générale, comme décrit ci-dessus, un soin particulier est mis à la conception des convertisseurs pour exploiter au mieux la possibilité de transfert thermique du MCP au fluide de travail pendant son expansion et la possibilité pour un complément de fluide de travail de pénétrer dans le convertisseur pendant l'expansion. Dans un mode de réalisation recommandé de l'invention, le fluide de travail expansé, extrait du convertisseur circule dans un échangeur de chaleur secondaire par lequel il transfère une partie de son énergie thermique à un fluide utilitaire. Ce fluide utilitaire peut être tout fluide industriel qu'il est utile de chauffer. Le fluide utilitaire est avantageusement de l'eau. Par exemple dans les applications domestiques de l'invention, il est particulièrement recommandé que le fluide utilitaire soit de l'eau circulant dans le circuit de chauffage ou de l'eau sanitaire. Le rendement énergétique global du procédé selon l'invention est alors exceptionnel. Le fluide utilitaire est en général contenu dans un réservoir secondaire, l'échangeur de chaleur secondaire étant immergé dans le fluide utilitaire. L'échangeur de chaleur est en communication avec les moyens de sortie du fluide de travail du convertisseur. En pratique, le réservoir secondaire est généralement muni de moyens d'entrée et de sortie de fluide utilitaire. Les débits d'entrée et de sortie peuvent commodément être réglés pour maintenir une valeur de consigne du fluide utilitaire.

Dans une variante de ce mode de réalisation, le fluide de travail est au moins en partie condensé dans l'échangeur de chaleur. Il est alors avantageux que le liquide condensé soit réinjecté dans le réservoir thermique, l'utilisation d'une pompe étant en général nécessaire pour compenser la baisse de pression du fluide de travail après sa sortie du convertisseur.

Dans un autre mode de réalisation particulier de l'invention, le réservoir thermique comprend des moyens pour transformer de l'énergie électrique en chaleur. L'énergie électrique provient alors avantageusement de sources d'énergie renouvelable, pour lesquelles un stockage est nécessaire, de préférence de capteurs photovoltaïques. Ce mode de réalisation permet d'atteindre des températures supérieures, donc d'utiliser des MCP à plus haute température de transition, qui ont des capacités de stockage intéressantes. Il permet aussi d'augmenter le rendement thermodynamique du procédé. Ce mode de réalisation peut être recommandé par exemple en cas de surplus d'énergie électrique disponible.

Le procédé selon l'invention permet de stocker et restituer sous forme thermomécanique de l'énergie thermique provenant de nombreuses sources.

Par exemple, dans une première forme de réalisation pratique de l'invention, l'énergie thermique qui est introduite dans le réservoir thermique est une énergie résiduaire produite par un processus primaire. L'invention permet alors de valoriser cette énergie, qui serait autrement perdue, ou en tout cas de mieux la valoriser. Par énergie résiduaire on entend une énergie dont la production n'est pas recherchée en tant que telle mais qui accompagne inévitablement le processus (dit primaire) lui donnant naissance. Il peut par exemple d'agir de la chaleur contenue dans des fluides de refroidissement de processus divers, industriels ou non, par exemple de métallurgie, de combustion classique ou de combustion dans des piles à combustible. Le procédé selon l'invention permet d'extraire de l'énergie mécanique de ces fluides de refroidissement, avant de les rejeter.

Dans une seconde forme de réalisation pratique de l'invention, l'énergie thermique qui est introduite dans le réservoir thermique provient au moins en partie de la transformation en chaleur d'énergie électrique excédentaire. Cette énergie peut par exemple être produite par des panneaux solaires photovoltaïques en période de grand ensoleillement.

Dans une troisième forme de réalisation pratique de l'invention, qui est particulièrement avantageuse, l'énergie thermique qui est introduite dans le réservoir thermique provient de capteurs solaires thermiques. On entend par capteurs solaires thermiques des systèmes qui provoquent l'élévation de température d'un fluide caloporteur par passage dans des conduits exposés au champ solaire. Ce mode de réalisation est avantageusement combiné avec ceux dans lesquels le fluide utilitaire est de l'eau, de préférence de l'eau sanitaire. En effet, l'énergie libre contenue dans le fluide caloporteur est alors utilisée de manière nettement meilleure à ce qui se passe dans les systèmes commerciaux dans lesquels une création d'entropie importante et une perte d'énergie libre est provoquée dans le contact entre le fluide caloporteur et le réservoir d'eau chaude dont la température est maintenue en dessous de 100°C pour des raisons de sécurité d'utilisation.

Il est entendu que les variantes et modes d'exécution de l'invention décrites dans ce mémoire peuvent être combinées entre elles, lorsqu'elles ne s'excluent pas manifestement.

L'invention concerne également un système pour le stockage thermomécanique d'énergie thermique comprenant:
- un réservoir d'énergie thermique comprenant au moins une unité de stockage d'énergie thermique, ladite unité comprenant un matériau de stockage capable de subir une transition de phase d'un état d'énergie interne inférieure vers un état d'énergie interne supérieure,
- des moyens d'entrée de l'énergie thermique à stocker, destinés à transmettre cette énergie thermique à au moins une unité de stockage et à permettre à une partie substantielle du matériau de stockage d'être transformée en sa phase d'énergie interne supérieure par absorption de cette énergie,
- des moyens pour contenir un fluide de travail, au moins en partie sous forme gazeuse, destiné à produire du travail par expansion volumétrique, les dits moyens permettant au fluide d'être en contact avec au moins une unité de stockage,
- un convertisseur d'énergie thermique en énergie mécanique, destiné à entrer en contact avec le fluide de travail et à recevoir de l'énergie par expansion volumétrique de ce dernier,
- des moyens de sortie de l'énergie mécanique produite par le convertisseur.

Le système selon l'invention comprend des moyens pour maintenir le volume de fluide de travail, qui est en contact avec le convertisseur, en communication fluidique avec le volume de fluide de travail, qui est en contact avec au moins une unité de stockage, et ce pendant au moins une partie de son expansion volumétrique.

Dans le système selon l'invention, le convertisseur est agencé de manière à permettre au fluide de travail d'être en contact avec au moins une unité de stockage de manière à en recevoir de l'énergie. Ce transfert d'énergie provient du changement de phase d'au moins une partie du matériau à changement de phase de sa phase d'énergie supérieur vers sa phase d'énergie inférieure.

Dans une variante du système selon l'invention, les moyens pour contenir le fluide de travail sont au moins en partie contenus dans le réservoir thermique.

Selon un mode de réalisation avantageux de cette variante, le convertisseur est également au moins en partie contenu dans le réservoir thermique. Cette variante permet de simplifier fortement la construction du système.

Dans encore une autre variante du système selon l'invention, le convertisseur d'énergie thermique en énergie mécanique comprend des moyens de type piston.

Le système selon l'invention est destiné à mettre en œuvre le procédé selon l'invention. Les modes de réalisation et variantes décrites pour le procédé selon l'invention s'appliquent donc mutatis mutandis au système selon l'invention. Par exemple la notion de contact doit être comprise de la même manière. Le cas échéant il est sous entendu que le système comprend des moyens permettant de réaliser les variantes du procédé, la concrétisation de ces moyens ne posant pas de problèmes particuliers à l'homme du métier.

**La** figure jointe illustre un mode particulier d'exécution du système selon l'invention. Ce système comprend les éléments suivants. Un réservoir d'énergie thermique (5) comprend un ensemble d'unités de stockage (10) représentées schématiquement par des cercles dessinés à distance les uns des autres et supportés par une grille (19). Le système comprend des moyens d'entrée d'énergie thermique (9) et (12) externes au réservoir et un échangeur (11) situé à l'intérieur du réservoir et entourée des unités de stockage (10). Le réservoir est par ailleurs rempli d'un fluide de travail constitué d'eau. Ce fluide de travail comprend une partie (18) sous forme liquide en dessous de la grille (19), une partie (8) également liquide dans laquelle baignent les unités (10) et dans laquelle est immergée l'échangeur (11) et enfin une partie (2) sous forme vapeur. Un convertisseur d'énergie thermique en énergie mécanique (3) est également disposé dans le réservoir (5). Il est immergé dans la partie (2) du fluide de travail qui est sous forme vapeur. Ce convertisseur (3) comprend des moyens de sortie d'énergie mécanique (1) et des moyens d'entrée (6) et sortie (4) de fluide de travail, munis d'obturateurs. Le système particulier illustré comporte également un réservoir secondaire (20) contenant un fluide utilitaire (15). Un échangeur secondaire, connecté aux moyens de sortie (4) du convertisseur par un conduit (7) est immergé dans le liquide (15). L'échangeur secondaire est destiné à être parcouru par le fluide de travail expansé extrait du convertisseur. La sortie de l'échangeur est connectée à un conduit (16) pénétrant dans le réservoir thermique comprenant une pompe (non représentée), permettant de réintroduire le fluide de travail dans le réservoir thermique. L'extrémité du conduit (16) comprend des moyens (non représentés) permettant de favoriser des turbulences au sein du fluide de travail, améliorant les transferts thermiques avec les unités de stockage. Le réservoir secondaire est également pourvu de moyens d'entrée (13) et de sortie (14) de fluide utilitaire.

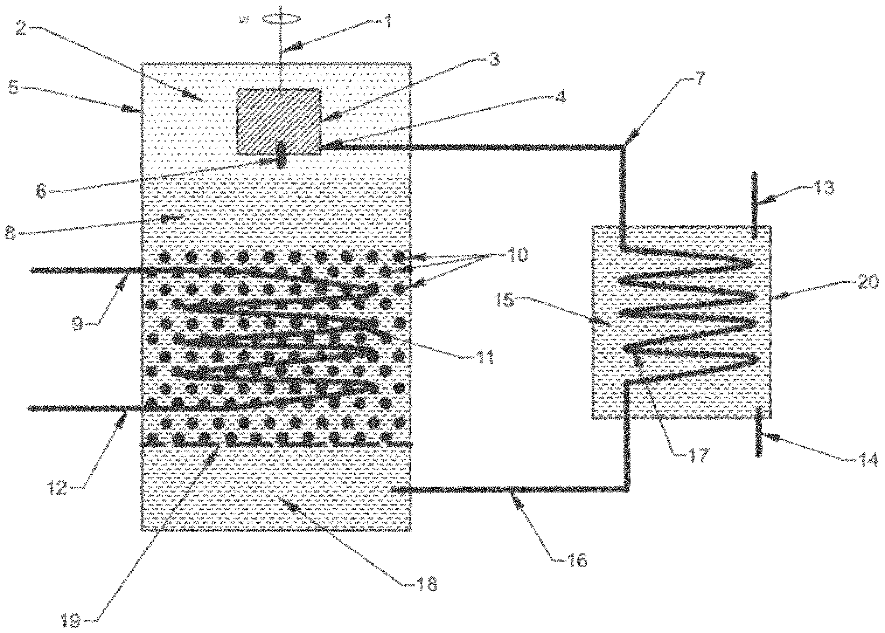

Des détails et particularités de l'invention vont ressortir de la description suivante d'un exemple de réalisation particulier de l'invention, en référence à la figure annexée.

### Exemple

Le système illustré à la figure fonctionne de la manière suivante, conformément à un mode avantageux de réalisation du procédé selon l'invention.

De l'eau (18) est introduite dans un réservoir (5) via des moyens d'entrée d'eau (non représentés), jusqu'à remplir celui-ci à 75% environ de son volume libre (hors convertisseur. Le réservoir, comprenant une grille de support (19), contient par ailleurs une quantité d'unités de stockage (10) sphériques remplissant environ 50% du volume du réservoir, reposant sur la grille (19), de manière à ménager un espace ne comprenant pas de d'unité de stockage dans la partie inférieure du réservoir. Les unités (10), baignées par l'eau (18), comprennent 95% en poids de MCP ayant une transition de phase de type solide-solide autour de 130°C. Le MCP est finement encapsulé d'un polymère assurant sa protection par rapport à l'eau. Le réservoir comprend également un échangeur thermique (11) parcouru par un fluide caloporteur, muni de moyens d'entrée /sortie (9, 12) d'un fluide caloporteur. L'échangeur thermique (11) est complètement entouré des unités (10) et de l'eau (18). Le fluide caloporteur est chauffé par un champ thermique, comprenant des panneaux solaires thermiques, non représentés sur la figure. Le convertisseur d'énergie thermique en énergie mécanique (3), situé dans le réservoir thermique, comprend un piston non représenté à la figure, dont le mouvement est vertical, auquel sont associés des moyens de rappel tendant à le placer en position basse. Le fluide de travail est constitué d'eau sous forme liquide (18) et vapeur (2). La vapeur peut pénétrer dans le convertisseur par les moyens d'entrée (6) qui comprennent un obturateur. Le fluide utilitaire contenu dans le réservoir secondaire (20) est constitué d'eau. Les moyens de sortie (4) comprennent également un obturateur.

En fonctionnement, dans une phase de stockage, les panneaux solaires sont soumis au rayonnement solaire et le débit du fluide caloporteur est réglé de manière à maintenir sa température légèrement au dessus de la température de transition de phase du matériau MCP, ici aux environs de 135-140°C. L'obturateur des moyens d'entrée (6) est fermé et le piston en position basse. Le contact entre le fluide caloporteur et le MCP, assuré par l'échangeur thermique provoque la transition du MCP vers sa phase à haute énergie. La phase de stockage est poursuivie jusqu'à provoquer la transition de phase de 90% en volume du matériau MCP. La température moyenne de ce dernier dans le réservoir thermique reste donc proche de sa température de transition, soit proche de 130°C. Il est à noter qu'il serait possible de poursuivre la phase de stockage légèrement au delà de 100% de transition, en provoquant une élévation de la température du MCP au delà de celle de transition de phase, mais cette possibilité n'est pas utilisée. A la fin de l'étape de stockage, la température du fluide de travail en contact avec l'unité de stockage est également, après équilibre, proche de 130°C. La pression dans le réservoir thermique approche 2,5 bars. Dans une phase de restitution, l'obturateur (6) est ouvert. La vapeur d'eau à 2,5 bars pénètre dans le convertisseur, ce qui exerce une pression sur le piston fortement supérieure à l'action des moyens de rappel. Le piston monte et provoque la mise en mouvement des moyens de sortie (1) d'énergie mécanique. Selon une caractéristique de ce mode d'exécution particulièrement avantageux de l'invention, pendant essentiellement toute la remontée du piston et l'expansion du fluide de travail qui la provoque, l'obturateur de moyens (6) reste ouvert. La pression dans le réservoir thermique a d'abord tendance à baisser suite à l'entrée de vapeur dans le convertisseur et à son expansion, ce qui provoque une vaporisation supplémentaire de la phase liquide au contact avec le MCP. Une partie du MCP repasse dans sa phase d'énergie inférieure, mais, sa température restant constante, la pression dans le réservoir thermique reste proche de 2,5 bars. De ce fait, la détente du fluide de travail est essentiellement isobare. Lorsque le piston, dont la section est de 0,25m2, atteint après environ 2 secondes de course sa position haute, l'obturateur des moyens d'entrée se ferme et l'obturateur des moyens de sortie s'ouvre. La course du piston est de 50 cm. Le piston redescend sous l'action des moyens de rappel, provoquant la circulation de la vapeur d'eau expansée dans le conduit (7) et l'échangeur (17) ce qui réchauffe le fluide utilitaire (15). La vapeur se condense dans l'échangeur et l'eau est réintroduite dans le réservoir thermique par le conduit (16) et la pompe qui y est associée. L'écoulement de l'eau réintroduite est conçu pour améliorer le mouvement du fluide de travail autour des unités de stockage et donc les transferts thermiques. Après un nombre suffisant d'étapes de restitution, la température de ce fluide approche 90°C et ensuite, elle est maintenue autour de cette valeur par le puisage d'eau chaude et l'introduction d'eau froide via les moyens (13) et (14).

## Revendications

1. Procédé pour le stockage thermomécanique d'énergie thermique selon lequel, dans une étape de stockage,
• de l'énergie thermique est introduite via des moyens d'entrée d'énergie thermique (9, 11, 12) dans un réservoir thermique (5) comprenant au moins une unité de stockage (10), ladite unité comprenant un matériau de stockage capable de subir une transition de phase d'une phase d'énergie interne inférieure vers une phase d'énergie interne supérieure,
• une partie substantielle du matériau de stockage est transformée en sa phase d'énergie interne supérieure par absorption de l'énergie thermique introduite dans le réservoir (5),
et selon lequel, dans une étape de restitution,
• de l'énergie thermique est transférée de la au moins une unité de stockage (10) à un fluide de travail (2, 8, 18), le fluide de travail (2, 8, 18) étant en contact avec la dite unité de stockage (10), une partie substantielle du matériau de stockage contenu dans l'unité de stockage (10) étant de ce fait progressivement transformée en sa phase d'énergie interne inférieure,
• une quantité du fluide de travail (2, 8, 18), au moins en partie sous forme gazeuse, est mise en contact avec un convertisseur d'énergie thermique (3) en énergie mécanique,
• de l'énergie mécanique est produite par le convertisseur (3), par expansion volumétrique du dit fluide de travail (2, 8, 18),
• l'énergie mécanique est transférée à des moyens de sortie d'énergie mécanique (1) en vue de son utilisation,
**caractérisé en ce que** le volume de fluide de travail (2, 8, 18) qui est en contact avec le convertisseur (3) est en communication fluidique avec le volume de fluide de travail (2, 8, 18) qui est en contact avec au moins une unité de stockage (10), pendant au moins une partie de son expansion volumétrique.

2. Procédé selon la revendication précédente, dans lequel le fluide de travail (2, 8, 18) comprend une phase liquide et une phase gazeuse, une partie de la phase liquide étant transformée en phase gazeuse par contact avec l'unité de stockage (10).

3. Procédé selon l'une des revendications précédentes dans lequel la phase d'énergie inférieure du matériau de stockage est une phase solide et la phase d'énergie supérieure est une phase liquide ou solide.

4. Procédé selon l'une des revendications précédentes, dans lequel le fluide de travail expansé, extrait du convertisseur (3), circule dans un échangeur de chaleur secondaire (17) par lequel il transfère une partie de son énergie thermique à un fluide utilitaire (15).

5. Procédé selon la revendication précédente, dans lequel le fluide utilitaire (15) est de l'eau chaude sanitaire et l'énergie thermique qui est introduite dans le réservoir thermique (5) provient de capteurs solaires thermiques.

6. Système pour le stockage thermomécanique d'énergie thermique comprenant :
• un réservoir d'énergie thermique (5) comprenant au moins une unité de stockage d'énergie thermique (10), ladite unité comprenant un matériau de stockage capable de subir une transition de phase d'un état d'énergie interne inférieure vers un état d'énergie interne supérieure,
• des moyens d'entrée (9, 11, 12) de l'énergie thermique à stocker, destinés à transmettre cette énergie thermique à au moins une unité de stockage (10) et à permettre à une partie substantielle du matériau de stockage d'être transformée en sa phase d'énergie interne supérieure par absorption de cette énergie,
• des moyens (5) pour contenir un fluide de travail (2, 8, 18), au moins en partie sous forme gazeuse, destiné à produire du travail par expansion volumétrique, les dits moyens permettant au fluide (2, 8, 18) d'être en contact avec au moins une unité de stockage (10),
• un convertisseur d'énergie thermique en énergie mécanique (3), destiné à entrer en contact avec le fluide de travail (2, 8, 18) et à recevoir de l'énergie par expansion volumétrique de ce dernier,
• des moyens de sortie (1) de l'énergie mécanique produite par le convertisseur,
**caractérisé en ce qu'**il comprend des moyens (6) pour maintenir le volume de fluide de travail (2, 8, 18), qui est en contact avec le convertisseur (3), en communication fluidique avec le volume de fluide de travail (2, 8, 18), qui est en contact avec au moins une unité de stockage (10), et ce pendant au moins une partie de son expansion volumétrique.

7. Système selon la revendication précédente dans lequel le convertisseur d'énergie thermique en énergie mécanique (3) comprend des moyens de type piston.
